(19) **Europäisches Patentamt**

**European Patent Office**

**Office européen des brevets**

(11) **EP 1 258 466 A1**

(12) **EUROPÄISCHE PATENTANMELDUNG**

(43) Veröffentlichungstag:
**20.11.2002 Patentblatt 2002/47**

(51) Int Cl.⁷: **C04B 28/06**

(21) Anmeldenummer: **01111477.4**

(22) Anmeldetag: **11.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Ed. Züblin Aktiengesellschaft
D-70567 Stuttgart (DE)**

(72) Erfinder: **Göpfert, Thorsten
70597 Stuttgart (DE)**

(74) Vertreter: **Wasmuth, Rolf, Dipl.-Ing. et al
Patentanwalt W. Jackisch & Partner
Menzelstrasse 40
70192 Stuttgart (DE)**

(54) **Zementfliessestrich und Verfahren zu dessen Herstellung**

(57)    Die Erfindung betrifft einen Zementestrich mit einem Bindemittel, enthaltend Sulfo-Aluminat-Zement mit einem Zementklinker und Calciumsulfat, mit Gesteinskörnungen und mit Wasser. Der Wasseranteil ist zur Erzielung eines fließfähigen Gemisches und der Calciumsulfatanteil zur zumindest näherungsweise vollständigen Bindung des Wasseranteils durch das Bindemittel eingestellt.

EP 1 258 466 A1

**Beschreibung**

Die Erfindung betrifft einen Zementestrich mit den Merkmalen nach dem Oberbegriff des Anspruchs 1 und ein Verfahren zur Herstellung eines Zementestrichs.

Die Herstellung und Verarbeitung von Zementestrichen ist vielfältigen, teils widersprüchlichen Forderungen ausgesetzt. Allgemein wird eine leichte Verarbeitbarkeit, ein guter Verbund zu eventuell erforderlichen Bewehrungen sowie eine kurze Trocknungszeit angestrebt. Herkömmliche Zementestriche auf Basis beispielsweise von Portland- oder Tonerde-Zementen werden dazu mit Gesteinskörnungen beispielsweise in Form von Sand und/oder Kies, Splitt sowie Zusatzmitteln bzw. Zusatzstoffen unter Zugabe von Wasser angesetzt.

Für eine gute Verarbeitbarkeit ist ein möglichst niedriger Schwerwiderstand der angerührten Zementestrich-Masse erwünscht. Eine reichliche Zugabe von Wasser zur Erzielung eines entsprechend geringen Scherwiderstandes mit einem Wasser/Zement-Wert größer als etwa 0,4 führt beim Austrocknen des Zementestrichs zu einem Feuchtegradienten über der Estrichhöhe. Damit geht ein sogenannter "Schüsseleffekt" einher, der zu einer schüsselartigen Krümmung der ausgegossenen Estrichplatte führt. Eine Einstellung des Zementestrichs mit geringerem Wassergehalt auf eine erdfeuchte bis weich-plastische Konsistenz verringert den "Schüsseleffekt", führt wegen seines hohen Scherwiderstandes jedoch zu einer schlechten Verarbeitbarkeit. Der Transport eines derartigen Zementestrichs beispielsweise mit einer Estrichpumpe und auch das gleichförmige Auftragen auf eine auszulegende Bodenfläche wird erschwert. Der Verbund mit einer ggf. eingelegten Bewehrung zur Steigerung der Belastbarkeit insbesondere hinsichtlich Biegebelastung kann unzuverlässig sein. Die Trocknungszeit bis zu einer Restfeuchte von kleiner etwa 2% beträgt mindestens vier Wochen.

Zur Verbesserung der Verarbeitbarkeit ist die Verwendung von chemischen Zusatzstoffen wie Fließmittel, Stabilisierer oder dgl. bekannt. Derartige Zementestriche sind sensibel hinsichtlich Abweichungen von der vorgegebenen Zusammensetzung und Verarbeitung und deshalb nur eingeschränkt tauglich für die Baupraxis. Die Trocknungszeiten sind dabei nicht reduziert und auch die Gefahr der Ausbildung des "Schüsseleffektes" ist nicht auszuschließen. Zur Verkürzung der Trocknungszeit ist der Einsatz von Schnellzement in Zementestrichen bekannt, wobei jedoch ebenfalls ein niedriger Wasser/Zementrichtwert zur Vermeidung des "Schüsseleffektes" mit einer einhergehenden schlechten Verarbeitbarkeit erforderlich ist. Allgemein kann bei derartigen Zementestrichen beim Aushärten eine unerwünscht hohe Expansion auftreten, zu deren Kompensation zwischen dem ausgelegten Zementestrich und einem umgebenden Mauerwerk ein hinreichend großer Spalt vorgesehen sein muß.

Der Erfindung liegt die Aufgabe zugrunde, einen gut verarbeitbaren Zementestrich mit verbesserter Formstabilität beim Aushärten sowie ein Verfahren zur Herstellung eines solchen Zementestrichs bereitzustellen.

Die Aufgabe wird durch einen Zementestrich mit den Merkmalen des Anspruchs 1 sowie durch ein Verfahren zur Herstellung eines Zementestrichs nach den Merkmalen des Anspruchs 17 gelöst.

Dazu ist erfindungsgemäß ein Zementestrich mit einem Bindemittel, mit Gesteinskörnungen, ggf. Zusätzen und mit Wasser vorgesehen, wobei das Bindemittel Sulfo-Aluminat-Zement (SAC) enthält, welcher aus Zementklinker und bevorzugt Calciumsulfat als Sulfatträger besteht. Dabei umfaßt der Begriff Sulfo-Aluminat-Zement auch die zur gleichen Familie gehörenden Ferro-Aluminat-Zemente (FAC). Entsprechende Zementklinker sind beispielhaft in folgender Tabelle gezeigt:

| | Gesamte Breite der Möglichkeiten | Bevorzugt bei SAC | Bevorzugt bei FAC |
|---|---|---|---|
| $C_4A_3\bar{S}$ (4 CaO·3 $Al_2O_3 \cdot SO_3$) | 25-85% | 55-75% | 33-63% |
| $C_2S$ (2 CaO · $SiO_2$) | 5-45% | 8-37% | 14-37% |
| $C_4AF$ (oder $C_6AF$) (4 bzw. 6 CaO · $Al_2O_3 \cdot Fe_2O_3$) | 2-40% | 3-10% | 15-35% |

Die in der Tabelle genannten Prozentzahlen sind durch einen geeigneten Sulfatträger zu 100% zu ergänzen. Dazu sind Gips, sulfo- oder ferroaluminatbildende (ettringitbildende) Zusätze, bevorzugt Calciumsulfat geeignet. Bei-spielhaft seien Anhydrit $CaSO_4$, Halbhydrat $CaSO_4 \cdot \frac{1}{2}H_2O$ und Dihydrat $CaSO_4 \cdot 2H_2O$ genannt.

In dem Gemisch aus dem Bindemittel, den Gesteinskörnern mit Zusätzen und dem Wasser wird der Wasseranteil zur Erzielung eines fließfähigen Gemisches eingestellt. Der Calciumsulfatanteil ist derart bemessen, daß beim Aushärten des Zementestrichs der Wasseranteil zumindest näherungsweise vollständig durch das Bindemittel gebunden ist. Je nach Art des Sulfo-Aluminat-Zementes wird dabei der Wasser/Zement-Wert innerhalb eines Bereiches zwischen 0,5 und 0,8 und bevorzugt zwischen 0,6 und 0,7 eingestellt. Dazu wird zunächst das theoretische Wasserbindevermögen des Sulfo-Aluminat-Zementes anhand seiner Kenndaten oder durch eine chemische Analyse bestimmt und in Form eines Wasserbindevermögenswertes (WBV-Wert) ausgedrückt. Es folgt die Herstellung einer Startmischung aus Sulfo-Aluminat-Zement, Gesteinskörnungen, Zusätzen und Wasser mit einem Start-Wasser/Zement-Wert, der über dem WBV-Wert liegt. Anschließend wird der Startmischung Calciumsulfat in dem Maße zugefügt, daß sich zumindest näherungsweise der WBV-Wert einstellt. Weitere Zusätze zur Steuerung des Wasserbindevermögens sind Ca- und Al-haltige Verbindungen, z.B. $Al(OH)_3$, $Al_2(SO_4)_3$.

Beispielsweise wird für einen gegebenen Sulfo-Aluminat-Zement anhand seiner chemischen Struktur dessen chemisches Wasserbindevermögen über eine stöchiometrische Berechnung der theoretische WBV-Wert mit 0,6 bestimmt. Anschließend wird eine Startmischung des Zementestrichs beispielsweise mit 50 Vol.-% Sand, 15 Vol.-% Zement und 30 Vol.-% Wasser hergestellt. Etwa weitere 5 Vol.-% ergeben sich etwa durch beim Mischen eingeschlossene Luft. Aus dem spezifischen Gewicht des Zementes von etwa 3 g/cm3 und dem des Wassers von 1 g/cm3 folgt beispielsweise eine Mischung von 450 kg Zement mit 300 kg Wasser, was einem Start-Wasser/Zement-Wert von 0,66 entspricht. Der gegenüber dem theoretischen WBV-Wert von 0,6 höher liegende Start-Wasser/Zement-Wert bedeutet, daß in der Startmischung überschüssiges, durch den Sulfo-Aluminat-Zement nicht bindbares Wasser vorhanden ist. Zu dessen chemischer Bindung wird anschließend Calciumsulfat in dem Maß zugefügt, daß sich zumindest näherungsweise ein WBV-Wert von 0,6 ergibt.

Dadurch kann erreicht werden, daß der Zementestrich mit einem hohen Wasseranteil hergestellt und dadurch ein niedriger, zu einer Fließfähigkeit führender Scherwiderstand eingestellt werden kann. Die niedrige Scherwiderstand erleichtert die Verarbeitung des Zementestrichs erheblich. Das fließfähige Material kann in einfacher Weise an den Ort der Verarbeitung gepumpt werden. Durch die Fließfähigkeit ergibt sich beim Aufbringen auf einen mit Estrich zu belegenden Boden eine die Verarbeitung vereinfachende Selbstnivellierung. Die hohe Fließfähigkeit begünstigt eine vollständige Verbindung mit einer bedarfsweise eingelegten Armierung.

Die zumindest näherungsweise Einstellung des Estrich-Gemisches auf den WBV-Wert führt zu einer nahezu vollständigen chemischen Bindung des eingerührten Wassers. Beim Aushärten spielen Trocknungsprozesse eine untergeordnete Rolle. Damit geht eine geringe Verformung des Estrichs beim Aushärten einher. Der unerwünschte "Schüsseleffekt" ist auch bei hohen Wasser/Zement-Werten zumindest nahezu vollständig vermeidbar. Dadurch sind auch Böden mit einem Zementestrich unter Berücksichtigung höchster Anforderungen an die Ebenheit herstellbar. Der Sulfo-Aluminat-Zement bindet gegenüber herkömmlichen Zementarten das Wasser vergleichsweise schnell, in dessen Folge der erfindungsgemäße Estrich bereits nach wenigen Tagen (je nach Temperatur maximal 14 Tage) vollständig ausgehärtet ist. Eine Nachbehandlung und ggf. die Austrocknungszeit kann entfallen. Der Estrich ist bei einem Wasser/ Zement-Wert von 0,1 über dem WBV-Wert, ggf. auch 0,15 über dem WBV-Wert, sofort oder zumindest kurzfristig belegbar.

Die Differenz des Start-Wasser/Zement-Wertes zum WBV-Wert und die zugehörige Zugabemenge von Calciumsulfat wird vorteilhaft derart eingestellt, daß die Expansion des Zementestrichs beim Aushärten kleiner als 1,5 cm pro Meter, bevorzugt kleiner als 1 Millimeter pro Meter ist.

Je nach Anwendungsfall kann die Ausführung des Bindemittels auch als Kompositzement mit Zumahlstoffen zweckmäßig sein. Dabei beträgt der Anteil der Zumahlstoffe am Bindemittel bevorzugt zwischen 0% und 80%. Als Zumahlstoffe sind beispielsweise Hüttensandmehl, gebrannter Ölschiefer, Flugasche (DIN EN 450), Mikrosilika, Gesteinsmehl (Kalksteinmehl, Quarzmehl oder andere Inertstoffe; Phonolith, Traß oder andere puzzolanische Stoffe) geeignet. Die genannten Zumahlstoffe können auch vorteilhaft als Zusatzstoffe dem Zementestrich beigefügt werden.

Eine weitere vorteilhafte Variante besteht in einem Zementestrich, bei dem das Bindemittel einen Mischzement aus Sulfoaluminatzement und Portlandzement (DIN EN 197) bzw. Tonerdezement enthält. Durch die genannten Varianten sind die Materialeigenschaften des Zementestrichs in weiten Bereichen einstellbar und an die jeweilige Aufgabenstellung präzise anpaßbar. Bei großvolumigen Anwendungen kann dabei auch der Kostenaspekt berücksichtigt werden.

Als Gesteinskörnungen haben sich Sand, Kies, Splitt oder ein Gemisch davon als zweckmäßig herausgestellt, wodurch eine große Härte des Zementestrichs im ausgehärteten Zustand erzielbar ist. Bei hochbelasteten Zementestrichen insbesondere für eine hohe punktförmige Belastung durch aufzustellende Maschinen, schwere Möbelstücke, Skulpturen oder dgl. sind Gesteinskörnungen zweckmäßig, die eine Hartstoffeinstreuung enthalten. Die Korngröße der Gesteinskörnungen ist vorteilhaft kleiner als 16 mm und insbesondere kleiner als 8 mm eingestellt. Dadurch ist ein guter Kompromiß hinsichtlich der Kosten des Gesamtmaterials, guter Verarbeitbarkeit und insbesondere der Schaffung einer glatten Oberfläche gefunden.

Je nach Anwendungsfall kann eine Verwendung von Sulfo-Aluminat-Zement in Reinform zweckmäßig sein. Dadurch wird eine sehr schnelle Aushärtezeit vergleichbar zu einem Schnellzement erzielt. Dadurch können kleine Gewerke oder Gewerke unter Termindruck unter Beibehaltung der zuvor beschriebenen Vorteile ausgeführt werden. Für gewöhnliche Anwendungen insbesondere bei großflächiger Ausbringung des Zementestrichs sind Zusätze zweckmäßig, die ein verzögerndes Zusatzmittel insbesondere auf Basis einer Säure enthalten. Dadurch ergibt sich eine Verarbeitungszeit von bis zu 48 Stunden, so daß auch großflächige oder schwierige, zeitaufwendige Arbeiten ohne Qualitätsbeeinträchtigung ausgeführt werden können.

Allgemein ist die Zugabe von Fließmitteln und/oder Stabilisierern (Entmischungsbehinderer) nicht erforderlich. Der fließfähige Estrich kann im Sinne seiner physikalischen Eigenschaften als Bingham-Medium angesehen werden. Demnach ist auch bei geringem Scherwiderstand eine hinreichend hohe Viskosität gegeben, die ein Absinken der Gesteinskörnungen im Bindemittelleim vermeidet. In besonderen Fällen, wo eine außergewöhnliche Fließfähigkeit des Zementestrichs erforderlich ist, wie beispielsweise beim Einsatz von engmaschigen Bewehrungen kann die Zugabe eines Fließmittels zweckmäßig sein. Dadurch läßt sich der schon ohnehin geringe Scherwiderstand weiter herabsetzen, so daß auch schwierig erreichbare Bereiche zuverlässig und mit einer guten Anbindung ausgegossen werden können.

Je nach Anwendungsfall kann auch die Zugabe weiterer Zusatzstoffe bzw. Zusatzmittel insbesondere in einer Dosiermenge bis etwa 5% zweckmäßig sein. Dazu kommen beispielsweise Luftporenbildner, Quellzusätze, Beschleuniger oder dgl. in Frage, wodurch die Eigenschaften des Estrichs in weiten Bereichen aufgabenspezifisch einstellbar sind.

Zur Verbesserung der Festigkeit und insbesondere der Biegefestigkeit beispielsweise bei dünnwandigen Estrichen auf einer elastischen Dämmschicht kann die Einlage einer Bewehrung in den Zementestrich zweckmäßig sein. In einer kostengünstigen Variante besteht dabei die Bewehrung aus Stahl beispielsweise in Form von Matten oder Fasern. In einer Leichtbauvariante mit einem guten Verhältnis von Festigkeit zu Gewicht ist die Ausbildung der Bewehrung aus Glasfasern beispielsweise in Form von Geweben, Glasfaserrovings oder dgl. zweckmäßig. Zur Erzielung einer hohen Elastizität und Schlagfestigkeit kann die Ausbildung der Bewehrung in Form von Kunststofffasern vorteilhaft sein.

In einer vorteilhaften Weiterbildung ist der Zementestrich in seiner Zusammensetzung als fließfähige Ausgleichsmasse eingestellt. Bei Altbausanierungen, Reparaturarbeiten oder dgl. können dadurch Bodenunebenheiten mit geringem Aufwand ausgeglichen werden. Eine dünnflüssige Einstellung der Ausgleichsmasse führt zu einer selbsttätigen Nivellierung der Oberfläche. Die zumindest näherungsweise vollständige Bindung des Wassergehaltes führt zu einer geringen Verformung der Ausgleichsmasse beim Aushärten, wodurch die beim Ausgleichen eingestellte geglättete Oberfläche auch nach dem Aushärten erhalten bleibt. Die chemische Bindung des Wassers durch den Sulfo-Aluminat-Zement führt zu einer vergleichsweise schnellen Aushärtung und damit Belastbarkeit.

In einer vorteilhaften Weiterbildung ist der Zementestrich ein Heizestrich. Die vorgenannten guten Verarbeitungseigenschaften erlauben eine gute Anbindung an eine Fußbodenheizung. Die niedrige Ausdehnung beim Aushärten vermeidet Spannungsrisse auch bei Vorlauftemperaturen der Heizung bis zu 65°C.

## Patentansprüche

1. Zementestrich mit einem Bindemittel, enthaltend Sulfo-Aluminat-Zement mit einem Zementklinker und einem Sulfatträger, mit Gesteinskörnungen und mit Wasser,
   **dadurch gekennzeichnet, daß** der Wasseranteil zur Erzielung eines fließfähigen Gemisches und der Anteil des Sulfatträgers, insbesondere von Calciumsulfat, zur zumindest näherungsweise vollständigen Bindung des Wasseranteils durch das Bindemittel eingestellt ist.

2. Zementestrich nach Anspruch 1,
   **dadurch gekennzeichnet, daß** der Wasser/Zement-Wert im Bereich zwischen 0,5 und 0,8 und bevorzugt zwischen 0,6 und 0,7 liegt.

3. Zementestrich nach Anspruch 1 oder 2,
   **dadurch gekennzeichnet, daß** das Bindemittel ein Kompositzement mit Zumahlstoffen ist, deren Anteil am Bindemittel bevorzugt zwischen 0% und 80% liegt.

4. Zementestrich nach einem der Ansprüche 1 bis 3,
   **dadurch gekennzeichnet, daß** das Bindemittel einen Mischzement aus Sulfoaluminatzement und Portland- bzw. Tonerdezement enthält.

5. Zementestrich nach einem der Ansprüche 1 bis 4,
   **dadurch gekennzeichnet, daß** die Gesteinskörnungen Sand, Kies und/oder Splitt enthalten.

6. Zementestrich nach einem der Ansprüche 1 bis 5,
   **dadurch gekennzeichnet, daß** die Gesteinskörnungen eine Hartstoffeinstreuung enthalten.

7. Zementestrich nach einem der Ansprüche 1 bis 6,
   **dadurch gekennzeichnet, daß** die Korngröße der Gesteinskörnungen kleiner als 16 mm und bevorzugt kleiner als 8 mm ist.

8. Zementestrich nach einem der Ansprüche 1 bis 7,
**dadurch gekennzeichnet, daß** ein verzögerndes Zusatzmittel insbesondere auf Basis einer Säure vorgesehen ist.

9. Zementestrich nach einem der Ansprüche 1 bis 8,
**dadurch gekennzeichnet, daß** ein Zusatzmittel in Form eines Fließmittels vorgesehen ist.

10. Zementestrich nach einem der Ansprüche 1 bis 9,
**dadurch gekennzeichnet, daß** Zusatzstoffe in Form von Zumahlstoffen vorgesehen sind.

11. Zementstrich nach einem der Ansprüche 1 bis 10,
**dadurch gekennzeichnet, daß** ein weiterer Zusatzstoff bzw. ein weiteres Zusatzmittel insbesondere in einer Dosiermenge von kleiner etwa 5% vorgesehen ist.

12. Zementestrich nach einem der Ansprüche 1 bis 11,
**dadurch gekennzeichnet, daß** im Zementestrich eine Bewehrung aus Stahl eingelegt ist.

13. Zementestrich nach einem der Ansprüche 1 bis 12,
**dadurch gekennzeichnet, daß** im Zementestrich eine Bewehrung aus Glasfasern eingelegt ist.

14. Zementestrich nach einem der Ansprüche 1 bis 13,
**dadurch gekennzeichnet, daß** im Zementestrich eine Bewehrung aus Kunststoffasern eingelegt ist.

15. Zementestrich nach einem der Ansprüche 1 bis 14,
**dadurch gekennzeichnet, daß** der Zementestrich als fließfähige Ausgleichsmasse eingestellt ist.

16. Zementestrich nach einem der Ansprüche 1 bis 15,
**dadurch gekennzeichnet, daß** der Zementestrich ein Heizestrich insbesondere mit einer Vorlauftemperatur bis zu 65°C ist.

17. Verfahren zur Herstellung eines Zementestrichs nach den Ansprüchen 1 bis 16, welches folgende Schritte umfaßt:

- Es wird das theoretische Wasserbindevermögen des Sulfo-Aluminat-Zementes bestimmt.

- Es wird eine Startmischung aus Sulfo-Aluminat-Zement, Gesteinskörnungen und Wasser hergestellt, bei der der Start-Wasser/Zement-Wert über dem Wasserbindevermögens-Wert liegt.

- Anschließend wird der Startmischung ein Sulfatträger, bevorzugt ein ettringitbildender Zusatz, insbesondere Calciumsulfat in dem Maße zugefügt, daß sich zumindest näherungsweise der Wasserbindevermögens-Wert einstellt.

18. Verfahren nach Anspruch 17,
**dadurch gekennzeichnet, daß** der Wasserbindevermögens-Wert und die Zugabe von Calciumsulfat derart eingestellt wird, daß die Expansion des Zementestrichs beim Aushärten kleiner als 1,5 cm pro Meter ist.

19. Verfahren nach Anspruch 18,
**dadurch gekennzeichnet, daß** der Wasserbindevermögenswert und die Zugabe von Calciumsulfat derart eingestellt wird, daß die maximale freie Expansion des Zementestrichs beim Aushärten kleiner als ein Millimeter pro Meter ist.

**Europäisches Patentamt**

## EUROPÄISCHER RECHERCHENBERICHT

Nummer der Anmeldung

EP 01 11 1477

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 357 167 A (KELLET WILLIAM H ET AL) 2. November 1982 (1982-11-02) * Spalte 4, Zeile 1 - Zeile 27 * | 1 | C04B28/06 |
| X | DE 44 34 322 A (DENKI KAGAKU KOGYO KK) 30. März 1995 (1995-03-30) | 1-5 | |
| A | * Beispiel 2 * | 17-19 | |
| X | DE 100 09 834 A (MBT HOLDING AG ZUERICH) 28. September 2000 (2000-09-28) * Seite 4, Zeile 3 - Zeile 63 * | 1,2,8 | |
| A | US 4 798 628 A (MILLS PETER S ET AL) 17. Januar 1989 (1989-01-17) * Spalte 2, Zeile 34 - Zeile 60 * * Beispiele 4,5 * | 1,8,17 | |
| A | US 4 060 425 A (HARADA YUTAKA ET AL) 29. November 1977 (1977-11-29) * Spalte 1, Zeile 40 - Zeile 67 * * Spalte 6, Zeile 27 - Zeile 37; Ansprüche 1,11 * | 1,17 | |

RECHERCHIERTE SACHGEBIETE (Int.Cl.7)

C04B

Der vorliegende Recherchenbericht wurde für alle Patentansprüche erstellt

| Recherchenort | Abschlußdatum der Recherche | Prüfer |
|---|---|---|
| MÜNCHEN | 6. Dezember 2001 | Rauscher, M |

**ANHANG ZUM EUROPÄISCHEN RECHERCHENBERICHT
ÜBER DIE EUROPÄISCHE PATENTANMELDUNG NR.**                    EP 01 11 1477

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 4357167 | A | | 02-11-1982 | AU | 527735 | B2 | 17-03-1983 |
| | | | | AU | 6206180 | A | 12-03-1981 |
| | | | | DE | 3033376 | A1 | 26-03-1981 |
| | | | | ZA | 8005238 | A | 30-09-1981 |
| DE 4434322 | A | | 30-03-1995 | JP | 7097246 | A | 11-04-1995 |
| | | | | JP | 7101761 | A | 18-04-1995 |
| | | | | JP | 7118043 | A | 09-05-1995 |
| | | | | JP | 7172885 | A | 11-07-1995 |
| | | | | DE | 4434322 | A1 | 30-03-1995 |
| | | | | KR | 204126 | B1 | 15-06-1999 |
| | | | | KR | 207867 | B1 | 15-07-1999 |
| DE 10009834 | A | | 28-09-2000 | AU | 2061600 | A | 07-09-2000 |
| | | | | DE | 10009834 | A1 | 28-09-2000 |
| | | | | GB | 2347415 | A | 06-09-2000 |
| | | | | GB | 2359550 | A | 29-08-2001 |
| | | | | JP | 2000247703 | A | 12-09-2000 |
| US 4798628 | A | | 17-01-1989 | AT | 63532 | T | 15-06-1991 |
| | | | | AU | 572356 | B2 | 05-05-1988 |
| | | | | AU | 4920985 | A | 08-05-1986 |
| | | | | CA | 1248557 | A1 | 10-01-1989 |
| | | | | CN | 85108582 | A ,B | 23-07-1986 |
| | | | | DE | 3582862 | D1 | 20-06-1991 |
| | | | | EP | 0181739 | A1 | 21-05-1986 |
| | | | | GB | 2166430 | A ,B | 08-05-1986 |
| | | | | IN | 167992 | A1 | 19-01-1991 |
| | | | | JP | 1800971 | C | 12-11-1993 |
| | | | | JP | 5008133 | B | 01-02-1993 |
| | | | | JP | 61155233 | A | 14-07-1986 |
| | | | | NZ | 214003 | A | 12-02-1988 |
| | | | | PL | 256011 | A1 | 23-02-1987 |
| | | | | ZA | 8508342 | A | 24-06-1987 |
| | | | | GB | 2175295 | A ,B | 26-11-1986 |
| US 4060425 | A | | 29-11-1977 | JP | 1024484 | C | 28-11-1980 |
| | | | | JP | 51116823 | A | 14-10-1976 |
| | | | | JP | 53032812 | B | 11-09-1978 |
| | | | | DE | 2613075 | A1 | 21-10-1976 |
| | | | | FR | 2306179 | A1 | 29-10-1976 |
| | | | | GB | 1514122 | A | 14-06-1978 |
| | | | | IT | 1058070 | B | 10-04-1982 |

EPO FORM P0461

Für nähere Einzelheiten zu diesem Anhang : siehe Amtsblatt des Europäischen Patentamts, Nr. 12/82